(19) Europäisches Patentamt
European Patent Office
Office européen des brevets

(11) **EP 3 124 550 A1**

(12) **EUROPEAN PATENT APPLICATION**
published in accordance with Art. 153(4) EPC

(43) Date of publication:
**01.02.2017 Bulletin 2017/05**

(21) Application number: **15767858.2**

(22) Date of filing: **19.03.2015**

(51) Int Cl.:
***C08L 101/14*** (2006.01) ***B01J 20/26*** (2006.01)
***B01J 20/30*** (2006.01) ***C08K 5/05*** (2006.01)
***C08L 101/08*** (2006.01)

(86) International application number:
**PCT/JP2015/058268**

(87) International publication number:
**WO 2015/146784 (01.10.2015 Gazette 2015/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.03.2014 JP 2014060583**

(71) Applicant: **Nagase ChemteX Corporation**
**Osaka-shi, Osaka 550-8668 (JP)**

(72) Inventors:
- **HOSOMI Tetsuya**
**Tatsuno-shi**
**Hyogo 679-4124 (JP)**
- **FUSHIKI Masato**
**Tatsuno-shi**
**Hyogo 679-4124 (JP)**
- **NAGANO Toyohiro**
**Tatsuno-shi**
**Hyogo 679-4124 (JP)**

(74) Representative: **Hoffmann Eitle**
**Patent- und Rechtsanwälte PartmbB**
**Arabellastraße 30**
**81925 München (DE)**

# (54) CROSSLINKING AGENT COMPOSITION FOR WATER-ABSORBING RESIN

(57) The present invention aims to provide a crosslinking agent composition for water-absorbing resins with which it is possible to produce a water-absorbing agent having a high water absorption capacity. The present invention also aims to provide a water-absorbing agent produced by crosslinking a water-absorbing resin with the crosslinking agent composition for water-absorbing resins. The present invention may include a crosslinking agent composition for water-absorbing resins containing a crosslinking agent (A) and a water absorption improver (B), wherein the water absorption improver (B) is a halohydrin compound (b1) represented by the formula (1) below or a compound (b2) containing at least one selected from the group consisting of carbonate, carbamide, carbamate, and ureide groups:

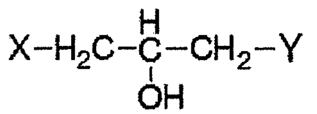
(1)

wherein X represents a chlorine atom or a bromine atom; and Y represents a hydroxyl group, a chlorine atom, or a bromine atom.

EP 3 124 550 A1

## Description

### TECHNICAL FIELD

The present invention relates to a crosslinking agent composition for water-absorbing resins with which it is possible to produce a water-absorbing agent having a high water absorption capacity. The present invention also relates to a water-absorbing agent produced by crosslinking a water-absorbing resin with the crosslinking agent composition for water-absorbing resins.

### BACKGROUND ART

Water-absorbing resins are widely used in various fields, including sanitary products, foods, agriculture and forestry industries, and civil engineering. These resins are generally used particularly in sanitary products such as paper diapers and sanitary napkins, taking advantage of their water absorption. Typical examples of such water-absorbing resins used in sanitary products include partially neutralized salts of polyacrylic acid or polymethacrylic acid.

Water-absorbing resins for use in sanitary products such as paper diapers are required to have a high water absorption capacity not only under normal pressure but also under body pressure (i.e. under pressure).

A possible known technical solution to the above problem is to crosslink the surface of water-absorbing resin particles with a crosslinking agent. In such a surface crosslinking method, the surface layers of water-absorbing resin particles containing a carboxylic acid group and/or a carboxylate group are crosslinked by a crosslinking agent while the water-absorbing resin particles are inhibited from being internally crosslinked in order to maintain the water absorption capacity, whereby a water-absorbing agent having a high water absorption rate can be obtained.

Examples of such crosslinking agents include those containing compounds having at least two halohydrin groups in their molecule or compounds containing a halohydrin group and a quaternary ammonium group in their molecule (see Patent Literature 1). Other examples include polyhydric alcohol compounds (e.g. ethylene glycol, propylene glycol, and polyethylene glycol), epoxy compounds (e.g. ethylene glycol diglycidyl ether, and polyethylene glycol diglycidyl ether), polyvalent amine compounds (e.g. ethylenediamine and diethylenetriamine), polyisocyanate compounds (e.g. 2,4-tolylene diisocyanate and hexamethylene diisocyanate), polyvalent oxazoline compounds (e.g. 4,4',5,5'-tetrahydro4,4,4',4'-tetramethyl-2,2'-bisoxazole, and 2,2'-(1,3-propanediyl)bis[4,5-dihydro-4,4-dimethyloxazole]), alkylene carbonate compounds (e.g. 1,3-dioxolan-2-one and 4-methyl-1,3-dioxolan-2-one), haloepoxy compounds (e.g. epichlorohydrin and epibromohydrin), silane coupling agents (e.g. γ-glycidoxypropyltrimethoxysilane), and polyvalent metal compounds (e.g. hydroxides and chlorides of zinc, calcium, or other metals) (see for example Patent Literature 2 to 6).

As described above, various crosslinking agents that crosslink water-absorbing resin particles have been developed, and methods for further increasing the crosslinking efficiency of these crosslinking agents have also been proposed. Nevertheless, recent improvements such as reduced thickness of sanitary products (e.g. paper diapers) have created a need for developing water-absorbing agents having higher water absorption capacity.

### CITATION LIST

### PATENT LITERATURES

Patent Literature 1: JP-A 2002-60544
Patent Literature 2: JP-A 2003-20363
Patent Literature 3: JP-A S61-16903
Patent Literature 4: JP-A S59-189103
Patent Literature 5: JP-A S62-7745
Patent Literature 6: JP-A S61-264006


### SUMMARY OF INVENTION

### TECHNICAL PROBLEM

A main object of the present invention is to provide a novel crosslinking agent composition for water-absorbing resins that can be used to produce a water-absorbing agent having a high water absorption capacity.

## SOLUTION TO PROBLEM

As a result of extensive studies, the present inventors have found that a water-absorbing agent having higher water absorption can be produced by crosslinking a water-absorbing resin with a crosslinking agent composition for water-absorbing resins which contains a crosslinking agent and a water absorption improver having a specific structure or functional group. The present invention was thus accomplished.

The present invention may include, for example, the following aspects.

[1] A crosslinking agent composition for water-absorbing resins, containing a crosslinking agent (A) and a water absorption improver (B),
wherein the water absorption improver (B) is a halohydrin compound (b1) represented by the following formula (1):

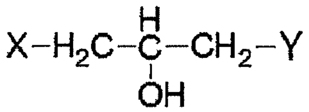 (1)

wherein X represents a chlorine atom or a bromine atom, and Y represents a hydroxyl group, a chlorine atom, or a bromine atom, or
a compound (b2) containing at least one selected from the group consisting of carbonate, carbamide, carbamate, and ureide groups.
[2] The crosslinking agent composition for water-absorbing resins according to Item [1],
wherein the crosslinking agent (A) is a halohydrin compound (a1) represented by the following formula (2):

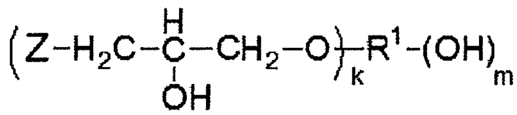 (2)

wherein $R^1$ represents a C2-C10 aliphatic hydrocarbon group having a valence of k+m; Z represents a chlorine atom or a bromine atom; and k and m represent integers satisfying the following relations: $1 \leq k \leq 6$, $0 \leq m \leq 4$, and $2 \leq k+m \leq 6$.
[3] The crosslinking agent composition for water-absorbing resins according to Item [1] or [2], wherein the crosslinking agent (A) and the water absorption improver (B) are present in a weight ratio of A:B of 50:50 to 99:1.
[4] A water-absorbing agent, produced by adding the crosslinking agent composition for water-absorbing resins according to any one of Items [1] to [3] to a water-absorbing resin containing a carboxylic acid group and/or a carboxylate group, followed by heating to effect crosslinking.
[5] A method for producing a water-absorbing agent, the method including adding the crosslinking agent composition for water-absorbing resins according to any one of Items [1] to [3] to a water-absorbing resin containing a carboxylic acid group and/or a carboxylate group, followed by heating to effect crosslinking.

## ADVANTAGEOUS EFFECTS OF INVENTION

A water-absorbing agent having a high water absorption capacity can be produced by crosslinking a water-absorbing resin with the crosslinking agent composition for water-absorbing resins of the present invention.

## DESCRIPTION OF EMBODIMENTS

### I. Crosslinking agent composition for water-absorbing resins of the present invention

First, the crosslinking agent composition for water-absorbing resins of the present invention (hereinafter referred to as "the composition of the present invention") is described in detail.

The composition of the present invention is a crosslinking agent composition for water-absorbing resins characterized by containing a crosslinking agent (A) and a water absorption improver (B),
wherein the water absorption improver (B) is a halohydrin compound (b1) represented by the following formula (1):

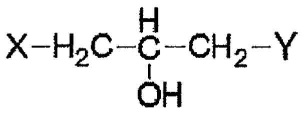 (1)

wherein X represents a chlorine atom or a bromine atom, and Y represents a hydroxyl group, a chlorine atom, or a bromine atom, or

a compound (b2) containing at least one selected from the group consisting of carbonate, carbamide, carbamate, and ureide groups.

Generally, the composition of the present invention essentially contains a crosslinking agent (A) and a water absorption improver (B), and particularly a water absorption improver having a specific structure or functional group. Thus, first, the water absorption improver (B), among the components of the composition of the present invention, is described.

The water absorption improver (B) is a halohydrin compound (b1) represented by the following formula (1):

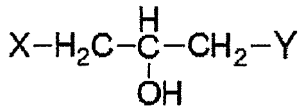 (1)

wherein X represents a chlorine atom or a bromine atom, and Y represents a hydroxyl group, a chlorine atom, or a bromine atom, or

a compound (b2) containing at least one selected from the group consisting of carbonate, carbamide, carbamate, and ureide groups.

Examples of the halohydrin compound (b1) include chlorohydrin compounds such as 3-chloro-1,2-propanediol and 1,3-dichloro-2-propanol; and bromohydrin compounds such as 3-bromo-1,2-propanediol and 1,3-dibromo-2-propanol. Commercial reagents may be directly used as the halohydrin compound (b1). The halohydrin compounds (b1) may be used alone or in combination of two or more.

The compound (b2) refers to a compound containing at least one selected from the group consisting of carbonate, carbamide, carbamate, and ureide groups.

Examples of the compound containing a carbonate group include aliphatic carbonates such as dimethyl carbonate, diethyl carbonate, dibutyl carbonate, and ethyl methyl carbonate; aromatic carbonates such as methyl phenyl carbonate and ethyl phenyl carbonate; and cyclic carbonates such as 1,3-dioxolan-2-one and 4-methyl-1,3-dioxolan-2-one.

Examples of the compound containing a carbamide group include lactams such as azetidin-2-one, pyrrolidin-2-one, piperidin-2-one, and 2-oxohexamethyleneimine; and imides such as pyrrolidine-2,5-dione and piperidine-2,6-dione.

Examples of the compound containing a carbamate group include oxazolidin-2-one, 3-(2-hydroxyethyl)oxazolidin-2-one, 3-(3-hydroxypropyl)oxazolidin-2-one,
3-(2-hydroxypropyl)oxazolidin-2-one, and
2-oxotetrahydro-1,3-oxazine.

Examples of the compound containing a ureide group include imidazolidin-2-one,
1-(2-hydroxyethyl)imidazolidin-2-one,
1,3-bis(hydroxymethyl)imidazolidin-2-one,
1,3-bis(hydroxymethyl)-4,5-dihydroxyimidazolin-2-one, 4,5-ureyleneimidazolidine-2-one, imidazolidine-2,4-dione, and tetrahydropyrimidin-2-one.

The compounds (b2) may be used alone or in combination of two or more. The water absorption improver (B) may also be a combination of the halohydrin compound (b1) and the compound (b2).

The amount of the water absorption improver (B) in the composition of the present invention may be adjusted appropriately according to the type of crosslinking agent (A) and other factors, but it is usually 1 to 30% by weight, preferably 1. 5 to 15% by weight of the composition of the present invention.

Next, the crosslinking agent (A) is described.

The crosslinking agent (A) is not particularly limited as long as it can crosslink a water-absorbing resin. Any known crosslinking agent may be used. Examples of such known crosslinking agents include halohydrin compounds, polyhydric alcohol compounds, epoxy compounds, polyvalent amine compounds, polyisocyanate compounds, polyvalent oxazoline compounds, alkylene carbonate compounds, haloepoxy compounds, silane coupling agents, and polyvalent metal compounds. These crosslinking agents may be used alone or in combination of two or more.

Examples of the polyhydric alcohol compounds include ethylene glycol, diethylene glycol, propylene glycol,

triethylene glycol, tetraethylene glycol, polyethylene glycol, 1,3-propanediol, dipropylene glycol, 2,2,4-trimethyl-1,3-pentanediol, polypropylene glycol, glycerol, polyglycerol, 2-butene-1,4-diol, 1,3-butanediol, 1,4-butanediol, 1,5-pentanediol, 1,6-hexanediol, 1,2-cyclohexanedimethanol, 1,2-cyclohexanediol, trimethylolpropane, diethanolamine, triethanolamine, polyoxypropylene, oxyethylene-oxypropylene block copolymers, pentaerythritol, and sorbitol.

Examples of the epoxy compounds include ethylene glycol diglycidyl ether, polyethylene glycol diglycidyl ether, glycerol polyglycidyl ether, diglycerol polyglycidyl ether, polyglycerol polyglycidyl ether, propylene glycol diglycidyl ether, polypropylene glycol diglycidyl ether, and glycidol.

Examples of the polyvalent amine compounds include ethylenediamine, diethylenetriamine, triethylenetetramine, tetraethylenepentamine, pentaethylenehexamine, polyethyleneimine, and inorganic or organic salts (e.g. azitinium salts) of these polyvalent amine compounds.

Examples of the polyisocyanate compounds include 2,4-tolylene diisocyanate and hexamethylene diisocyanate. Examples of the polyvalent oxazoline compounds include 1,2-ethylenebisoxazoline.

Examples of the alkylene carbonate compounds include 1,3-dioxolan-2-one, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxan-2-one, 4-methyl-1,3-dioxan-2-one, and 4,6-dimethyl-1,3-dioxan-2-one.

Examples of the haloepoxy compounds include epichlorohydrin, epibromohydrin, α-methylepichlorohydrin, and polyvalent amine adducts thereof (e.g. Kymene (Registered Trademark) available from Hercules Inc.).

Examples of other known crosslinking agents include silane coupling agents such as γ-glycidoxypropyltrimethoxysilane and γ-aminopropyltriethoxysilane; and polyvalent metal compounds such as hydroxides and chlorides of zinc, calcium, magnesium, aluminium, iron, zirconium, or other metals.

The crosslinking agent (A) is preferably a halohydrin compound, and more preferably a halohydrin compound (a1) represented by the following formula (2):

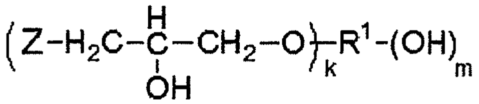 (2)

wherein $R^1$ represents a C2-C10 aliphatic hydrocarbon group having a valence of k+m; Z represents a chlorine atom or a bromine atom; and k and m represent integers satisfying the following relations: $1 \leq k \leq 6$, $0 \leq m \leq 4$, and $2 \leq k+m \leq 6$.

The halohydrin compound (a1) can be produced by known methods. For example, the halohydrin compound (a1) may be synthesized according to the method disclosed in JP-A 2002-60544.

As for the ratio of the crosslinking agent (A) and the water absorption improver (B), the proportion of the water absorption improver (B) to the sum of the crosslinking agent (A) and the water absorption improver (B) is usually 1 to 50% by weight, preferably 1 to 30% by weight, more preferably 2.5 to 25% by weight. When the proportion of the water absorption improver (B) is more than 50% by weight, the water absorption capacity may be inferior to that obtained when the crosslinking agent (A) alone is used. When the proportion of the water absorption improver (B) is less than 1% by weight, the water absorption improver (B) may not work effectively.

The composition of the present invention preferably contains water, a hydrophilic organic solvent, or a mixed solvent of these solvents. Examples of the hydrophilic organic solvent include lower aliphatic alcohols such as methanol, ethanol, n-propyl alcohol, and isopropyl alcohol; ketones such as acetone; ethers such as dioxane, tetrahydrofuran, and methoxy (poly) ethylene glycol; amides such as e-caprolactam and N,N-dimethylformamide; sulfoxides such as dimethyl sulfoxide; and polyhydric alcohols such as ethylene glycol, diethylene glycol, propylene glycol, triethylene glycol, tetraethylene glycol, polyethylene glycol, 1,3-propanediol, dipropylene glycol, polypropylene glycol, glycerol, and polyglycerol. These hydrophilic organic solvents may be used alone or in admixture of two or more.

The amount of the hydrophilic organic solvent to be used may be adjusted appropriately according to the type of crosslinking agent and other factors, but it is usually 10 to 2000 parts by weight, preferably 50 to 1000 parts by weight, relative to 100 parts by weight of the crosslinking agent.

The composition of the present invention may contain other additives as needed. Examples of such other additives include disinfectants, deodorants, antibacterial agents, perfumes, various inorganic powders, foaming agents, pigments, dyes, hydrophilic short fibers, fertilizers, oxidizing agents, reducing agents, water, and salts.

II. Water-absorbing agent produced with composition of the present invention

Next, the water-absorbing agent produced with the composition of the present invention (hereinafter referred to as "the water-absorbing agent of the present invention") is described in detail.

The water-absorbing agent of the present invention is produced by adding the composition of the present invention to a water-absorbing resin containing a carboxylic acid group and/or a carboxylate group, followed by heating to effect crosslinking.

The water-absorbing agent of the present invention is usually produced by crosslinking the surface of a water-absorbing resin containing a carboxylic acid group and/or a carboxylate group with the composition of the present invention. The composition of the present invention may also be used to internally crosslink the water-absorbing resin, as needed. Such a water-absorbing agent internally crosslinked by the composition of the present invention is also included in the present invention.

II-1. Surface crosslinking

First, the case where the surface of a water-absorbing resin containing a carboxylic acid group and/or a carboxylate group is crosslinked with the composition of the present invention is described.

The water-absorbing resin containing a carboxylic acid group and/or a carboxylate group is not particularly limited as long as it contains a carboxylic acid group and/or a carboxylate group and absorbs water and swells to form a hydrogel. Any known water-absorbing resin may be used. Specific examples include crosslinked, partially neutralized polyacrylic acids, self-crosslinked, partially neutralized polyacrylic acids, crosslinked starch-acrylate graft copolymers, hydrolysates of crosslinked starch-acrylonitrile graft copolymers, crosslinked vinyl alcohol-acrylate copolymers, crosslinked acrylate-acrylamide copolymers, hydrolysates of crosslinked acrylate-acrylonitrile copolymers, and crosslinked copolymers of acrylates and 2-acrylamido-2-methylpropanesulfonates. These may be used alone or in combination of two or more.

Among the examples of the water-absorbing resin, water-absorbing resins containing a carboxylic acid group and/or a carboxylate group at a high density are preferred because they have high water absorption capacities. Specific examples of such water-absorbing resins include crosslinked, partially neutralized acrylic acids and self-crosslinked, partially neutralized polyacrylic acids. Examples of carboxylates include sodium salts, potassium salts, and ammonium salts, with sodium salts being particularly preferred.

The production method and shape of the water-absorbing resin containing a carboxylic acid group and/or a carboxylate group are not particularly limited. Examples include a reverse phase suspension polymerization method and pearl-like water-absorbing resin particles produced by this method; and an aqueous solution polymerization method and water-absorbing resins having a scale-like, bulky, rock-like, granular, or amorphous shape produced by drying and crushing of polymers formed by this method. The examples also include pellets formed from these water-absorbing resin particles.

When surface crosslinking is carried out with the composition of the present invention, although the amount of the composition of the present invention varies depending on the type and degree of crosslinking of the water-absorbing resin and the intended degree of surface crosslinking, the amount thereof may be adjusted such that the amount of the crosslinking agent (A) in the composition of the present invention to be used is usually 0.01 to 20 parts by weight, preferably 0.05 to 10 parts by weight, relative to 100 parts by weight of the water-absorbing resin. When the amount of the crosslinking agent in the composition of the present invention to be used relative to 100 parts by weight of the water-absorbing resin is within the range indicated above, not only can the water-absorbing resin be effectively crosslinked, but also a decrease in the water absorption capacity or water absorption rate of the resulting water-absorbing agent, which can occur due to an excessive increase in the crosslink density, can be prevented.

It is appropriate that the composition of the present invention and the water-absorbing resin be mixed together by a known method using a cylindrical mixer, V-shaped mixer, ribbon type mixer, screw mixer, double arm mixer, grinding kneader, or other devices, for example, after an aqueous solution of the crosslinking agent is sprayed to the water-absorbing resin. In the mixing, a surfactant may be added as needed.

In the crosslinking of the water-absorbing resin by the composition of the present invention, water, a hydrophilic organic solvent, or a mixed solvent of these solvents may be added as needed. Examples of the hydrophilic organic solvent include the same as the hydrophilic organic solvents that may be added to the composition of the present invention. These hydrophilic organic solvents may be used alone, or two or more of these may be combined into a mixed solvent.

To produce the water-absorbing agent of the present invention, the composition of the present invention is added to and mixed with the water-absorbing resin containing a carboxylic acid group and/or a carboxylate group, followed by heating to effect surface crosslinking.

The heating temperature during the surface crosslinking may vary appropriately according to the type of water-absorbing resin and other factors, but it is usually 40°C to 250°C. When the heating temperature is within the range indicated above, the surface of the water-absorbing resin particles can be uniformly crosslinked, without degradation of the water-absorbing resin particles, to produce a water-absorbing agent having an excellent balance between water absorption ratio under normal pressure and water absorption ratio under pressure and a high water absorption capacity.

However, since the composition of the present invention is highly reactive, it allows a surface crosslinking reaction to occur rapidly and uniformly even at a relatively low heating temperature. Accordingly, the heating temperature is preferably 60°C to 200°C, more preferably 70°C to 200°C.

The heating time may also be adjusted appropriately according to the type of water-absorbing resin and other factors, but it is usually 0.2 hours to 3 hours.

Furthermore, the water-absorbing agent of the present invention may contain other additives to impart various functions. Examples of such additives include disinfectants, deodorants, antibacterial agents, perfumes, various inorganic powders, foaming agents, pigments, dyes, hydrophilic short fibers, fertilizers, oxidizing agents, reducing agents, water, and salts. The amounts of these other additives can be selected appropriately by a person skilled in the art. As described above, these other additives may be added to the composition of the present invention and then mixed with the water-absorbing resin, or may be added separately from the composition of the present invention.

EXAMPLES

The present invention is described in further detail below with reference to examples, but the present invention is by no means limited to these examples. In the following description, "%" indicates "% by weight".

(Water absorption ratio under pressure of water-absorbing agent)

The water absorption performance under pressure of water-absorbing agents produced by crosslinking a water-absorbing resin with a composition of the present invention (water-absorbing agents of the present invention) was assessed as follows.

A crucible-shaped glass filter (inner diameter: 40 mm; height: 70 mm) was placed vertically, and the water-absorbing agent (1 g) was placed uniformly therein. A PET film (thickness: 100 μm) was then put on the water-absorbing agent, and the initial weight Wa (g) was measured. Further, a weight having an outer diameter of 38 mm was put thereon to give a load of 50 g/cm$^2$. Subsequently, the crucible-shaped glass filter containing the water-absorbing agent, with its bottom facing down, was immersed in a vat (length: 210 mm; width: 170 mm) containing 0.9% physiological saline (about 630 g) for 30 minutes. After immersion, the crucible-shaped glass filter was taken out, and the weight after water absorption Wb (g) was measured. The water absorption ratio under pressure was calculated from these Wa and Wb values using the following equation.

$$\text{Water absorption ratio under pressure} = (\text{Wb (g)} - \text{Wa (g)})/\text{Weight of water-absorbing agent (g)}$$

(Synthesis of crosslinking agent (A))

Synthesis Example 1

Sorbitol (100 g, 0.55 mol) was fed to a 500 mL separable flask and then dissolved at an internal temperature of 110°C to 115°C. Subsequently, tin tetrachloride (0. 4 g) as a catalyst was fed thereto. Epichlorohydrin (124 g, 1.3 mol) was added dropwise thereto while the internal temperature was maintained at 95°C to 100°C. When the dropwise addition was finished, the reaction system formed a homogeneous solution. After the completion of the dropwise addition, stirring was continued in the same temperature range, and the reaction was finished when the disappearance of epichlorohydrin was confirmed based on the quantification of epoxy groups by titration. After the completion of the reaction, ion-exchanged water (125 g) and a 48.5% sodium hydroxide aqueous solution (1.6 g) were added in the same temperature range, and the solvent was removed by vacuum concentration to give a sorbitol chlorohydrin compound.

Synthesis Example 2

Glycerol (200 g, 2.2 mol) and tin tetrachloride (0.9 g) as a catalyst were fed to a 1 L separable flask, followed by heating and stirring. Epichlorohydrin (221 g, 2.4 mol) was added dropwise thereto while the internal temperature was maintained at 70°C to 75°C. When the dropwise addition was finished, the reaction system formed a homogeneous solution. After the completion of the dropwise addition, the internal temperature was raised to 90°C to 95°C and stirring

was continued in the same temperature range, and the reaction was finished when the disappearance of epichlorohydrin was confirmed based on the quantification of epoxy groups by titration. After the completion of the reaction, ion-exchanged water (280 g) and a 48.7% sodium hydroxide aqueous solution (0.3 g) were added in the same temperature range, and the solvent was removed by vacuum concentration. Isopropyl alcohol (281 g) was added to the concentrated residue, followed by filtration to give a glycerol chlorohydrin compound.

(Production of water-absorbing agent by surface crosslinking of water-absorbing resin particles)

Example 1

The sorbitol chlorohydrin compound (0.1 g in terms of solids) produced in Synthesis Example 1 as a crosslinking agent (A) and oxazolidin-2-one (0.01 g) as a water absorption improver (B) were diluted with water (0.5 g) to prepare a composition of the present invention (crosslinking agent composition solution 1). The sorbitol chlorohydrin compound (0.2 g in terms of solids) produced in Synthesis Example 1 as a crosslinking agent (A) and oxazolidin-2-one (0.02 g) as a water absorption improver (B) were diluted with water (1.0 g) to prepare a composition of the present invention (crosslinking agent composition solution 2).

The crosslinking agent composition solution 1 was sprayed to a polyacrylate water-absorbing resin (10 g), followed by sufficient mixing (1%/water-absorbing resin particles). Likewise, the crosslinking agent composition solution 2 was sprayed to a polyacrylate water-absorbing resin (10 g), followed by sufficient mixing (2%/water-absorbing resin particles). The thus-treated water-absorbing resins were heated at 150°C for 60 minutes to give water-absorbing agents of the present invention surface-crosslinked by the compositions of the present invention. Table 1 shows the performance of these water-absorbing agents.

Example 2

Water-absorbing agents of the present invention were produced in the same manner as in Example 1, except that imidazolidin-2-one (0.01 g and 0.02 g, respectively) was used as the water absorption improver (B) in Example 1. Table 1 shows their performance.

Example 3

Water-absorbing agents of the present invention were produced in the same manner as in Example 1, except that dimethyl carbonate (0.01 g and 0.02 g, respectively) was used as the water absorption improver (B) in Example 1. Table 1 shows their performance.

Example 4

Water-absorbing agents of the present invention were produced in the same manner as in Example 1, except that 3-chloro-1,2-propanediol (0.01 g and 0. 02 g, respectively) was used as the water absorption improver (B) in Example 1. Table 1 shows their performance.

Example 5

Water-absorbing agents of the present invention were produced in the same manner as in Example 1, except that 1,3-dichloro-2-propanol (0.01 g and 0.02 g, respectively) was used as the water absorption improver (B) in Example 1. Table 1 shows their performance.

Example 6

The glycerol chlorohydrin compound (0.1 g in terms of solids) produced in Synthesis Example 2 as a crosslinking agent (A) and oxazolidin-2-one (0.01 g) as a water absorption improver (B) were diluted with water (0.5 g) to prepare a composition of the present invention (crosslinking agent composition solution 3). The glycerol chlorohydrin compound (0.2 g in terms of solids) produced in Synthesis Example 2 as a crosslinking agent (A) and oxazolidin-2-one (0.02 g) as a water absorption improver (B) were diluted with water (1.0 g) to prepare a composition of the present invention (crosslinking agent composition solution 4).

The crosslinking agent composition solution 3 was sprayed to a polyacrylate water-absorbing resin (10 g), followed by sufficient mixing (1%/water-absorbing resin particles). Likewise, the crosslinking agent composition solution 4 was sprayed to a polyacrylate water-absorbing resin (10 g), followed by sufficient mixing (2%/water-absorbing resin

particles). The thus-treated water-absorbing resins were heated at 150°C for 60 minutes to give water-absorbing agents of the present invention surface-crosslinked by the compositions of the present invention. Table 1 shows the performance of these water-absorbing agents.

Example 7

Water-absorbing agents of the present invention were produced in the same manner as in Example 6, except that imidazolidin-2-one (0.01 g and 0.02 g, respectively) was used as the water absorption improver (B) in Example 6. Table 1 shows their performance.

Example 8

Water-absorbing agents of the present invention were produced in the same manner as in Example 6, except that dimethyl carbonate (0.01 g and 0.02 g, respectively) was used as the water absorption improver (B) in Example 6. Table 1 shows their performance.

Example 9

Water-absorbing agents of the present invention were produced in the same manner as in Example 6, except that imidazolidine-2,4-dione (0.01 g and 0.02 g, respectively) was used as the water absorption improver (B) in Example 6. Table 1 shows their performance.

Example 10

Water-absorbing agents of the present invention were produced in the same manner as in Example 6, except that pyrrolidine-2,5-dione (0.01 g and 0.02 g, respectively) was used as the water absorption improver (B) in Example 6. Table 1 shows their performance.

Comparative Example 1

The sorbitol chlorohydrin compound (0.1 g in terms of solids) produced in Synthesis Example 1 as a crosslinking agent was diluted with water (0.5 g) to prepare a crosslinking agent aqueous solution (crosslinking agent composition solution 5). The sorbitol chlorohydrin compound (0.2 g in terms of solids) produced in Synthesis Example 1 as a crosslinking agent was diluted with water (1.0 g) to prepare a crosslinking agent aqueous solution (crosslinking agent composition solution 6).

The crosslinking agent composition solution 5 was sprayed to a polyacrylate water-absorbing resin (10 g), followed by sufficient mixing (1%/water-absorbing resin particles). Likewise, the crosslinking agent composition solution 6 was sprayed to a polyacrylate water-absorbing resin (10 g), followed by sufficient mixing (2%/water-absorbing resin particles). The thus-treated water-absorbing resins were heated at 150°C for 60 minutes to give surface-crosslinked water-absorbing agents. Table 1 shows the performance of these water-absorbing agents.

[Table 1]

| | Crosslinking agent (A) | Water absorption Improver (B) | Water absorption ratio | |
|---|---|---|---|---|
| | | | (1%/water-absorbing resin) | (2%/water-absorbing resin) |
| Example 1 | Sorbitol chlorohydrin compound | Oxazolidin-2-one | 18.5 | 23.5 |
| Example 2 | Sorbitol chlorohydrin compound | Imidazolidin-2-one | 18.6 | 22.6 |
| Example 3 | Sorbitol chlorohydrin compound | Dimethyl carbonate | 17 | 23.3 |

(continued)

| | Crosslinking agent (A) | Water absorption Improver (B) | Water absorption ratio | |
|---|---|---|---|---|
| | | | (1%/water-absorbing resin) | (2%/water-absorbing resin) |
| Example 4 | Sorbitol chlorohydrin compound | 3-Chloro-1,2-propanediol | 16 | 24.2 |
| Example 5 | Sorbitol chlorohydrin compound | 1,3-Dichloro-2-propanol | 18.7 | 24.2 |
| Example 6 | Glycerol chlorohydrin compound | Oxazolidin-2-one | 21.5 | 27 |
| Example 7 | Glycerol chlorohydrin compound | Imidazolidin-2-one | 19.9 | 25.4 |
| Example 8 | Glycerol chlorohydrin compound | Dimethyl carbonate | 19.7 | 26.1 |
| Example 9 | Glycerol chlorohydrin compound | Imidazolidine-2,4-dione | 20.9 | 22.8 |
| Example 10 | Glycerol chlorohydrin compound | Pyrrolidine-2,5-dione | 20.5 | 25 |
| Comparative Example 1 | Sorbitol chlorohydrin compound | - | 16 | 21 |

As is clear from the results shown in Table 1, the water-absorbing agents of the present invention produced with the compositions of the present invention have higher water absorption ratios than the water-absorbing agents produced with the water-absorbing resin crosslinking agent aqueous solutions containing no water absorption improver (B).

(Synthesis of crosslinking agent (A))

Synthesis Example 3

Glycerol (400 g, 4.3 mol) and boron trifluoride (0.6 g) as a catalyst were fed to a 2 L separable flask, followed by heating and stirring. Epichlorohydrin (442 g, 4.8 mol) was added dropwise thereto while the internal temperature was maintained at 50°C to 55°C. When the dropwise addition was finished, the reaction system formed a homogeneous solution. After the completion of the dropwise addition, stirring was continued in the same temperature range, and the reaction was finished when the disappearance of epichlorohydrin was confirmed based on the quantification of epoxy groups by titration. After the completion of the reaction, ion-exchanged water (442 g) and a 48.7% sodium hydroxide aqueous solution (0.4 g) were added in the same temperature range, and the solvent was removed by vacuum concentration. Isopropyl alcohol (842 g) was added to the concentrated residue, followed by filtration to give a glycerol chlorohydrin compound.

(Production of water-absorbing agent by surface crosslinking of water-absorbing resin particles)

Example 11

The glycerol chlorohydrin compound (0.1 g in terms of solids) produced in Synthesis Example 3 as a crosslinking agent (A) and imidazolidine-2, 4-dione (0. 005 g) as a water absorption improver (B) were diluted with water (0.5 g) to prepare a composition of the present invention (crosslinking agent composition solution 7).

The crosslinking agent composition solution 7 was sprayed to a polyacrylate water-absorbing resin (10 g), followed by sufficient mixing (1%/water-absorbing resin particles). The thus-treated water-absorbing resin was heated at 150 °C for 60 minutes to give a water-absorbing agent of the present invention surface-crosslinked by the composition of the present invention. Table 2 shows the performance of the water-absorbing agent.

Example 12

A water-absorbing agent of the present invention was produced in the same manner as in Example 11, except that imidazolidine-2,4-dione (0.01 g) was used as the water absorption improver (B) in Example 11. Table 2 shows its performance.

Example 13

A water-absorbing agent of the present invention was produced in the same manner as in Example 11, except that imidazolidine-2,4-dione (0.02 g) was used as the water absorption improver (B) in Example 11. Table 2 shows its performance.

Example 14

A water-absorbing agent of the present invention was produced in the same manner as in Example 11, except that imidazolidine-2,4-dione (0.03 g) was used as the water absorption improver (B) in Example 11. Table 2 shows its performance.

Example 15

A water-absorbing agent of the present invention was produced in the same manner as in Example 11, except that imidazolidine-2,4-dione (0.04 g) was used as the water absorption improver (B) in Example 11. Table 2 shows its performance.

[Table 2]

| | Water absorption improver (B) | Water absorption ratio |
|---|---|---|
| | Proportion (wt%) | (1%/water-absorbing resin) |
| Example 11 | 5 | 21.2 |
| Example 12 | 9 | 21.7 |
| Example 13 | 17 | 22.8 |
| Example 14 | 23 | 24.0 |
| Example 15 | 29 | 21.5 |

The results in Table 2 show that the water-absorbing agents of the present invention produced with the compositions of the present invention exhibit increases in water absorption ratio as the proportion of the water absorption improver (B) to the sum of the crosslinking agent (A) and the water absorption improver (B) increases up to about 25% by weight.

INDUSTRIAL APPLICABILITY

The composition of the present invention can effectively crosslink a water-absorbing resin as compared to conventional crosslinking agents free of water absorption improvers. Accordingly, the water-absorbing agent produced

with the composition of the present invention (the water-absorbing agent of the present invention) exhibits a high water absorption capacity and thus is useful in the field of sanitary products such as paper diapers.

## Claims

1. A crosslinking agent composition for water-absorbing resins, comprising:

   a crosslinking agent (A); and
   a water absorption improver (B),

   wherein the water absorption improver (B) is a halohydrin compound (b1) represented by the following formula (1):

   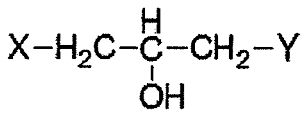 (1)

   wherein X represents a chlorine atom or a bromine atom, and Y represents a hydroxyl group, a chlorine atom, or a bromine atom, or
   a compound (b2) containing at least one selected from the group consisting of carbonate, carbamide, carbamate, and ureide groups.

2. The crosslinking agent composition for water-absorbing resins according to claim 1,
   wherein the crosslinking agent (A) is a halohydrin compound (a1) represented by the following formula (2):

   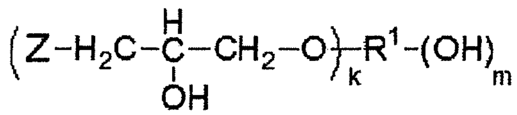 (2)

   wherein $R^1$ represents a C2-C10 aliphatic hydrocarbon group having a valence of k+m; Z represents a chlorine atom or a bromine atom; and k and m represent integers satisfying the following relations: $1 \leq k \leq 6$, $0 \leq m \leq 4$, and $2 \leq k+m \leq 6$.

3. The crosslinking agent composition for water-absorbing resins according to claim 1 or 2,
   wherein the crosslinking agent (A) and the water absorption improver (B) are present in a weight ratio of A:B of 50:50 to 99:1.

4. A water-absorbing agent, produced by adding the crosslinking agent composition for water-absorbing resins according to any one of claims 1 to 3 to a water-absorbing resin containing a carboxylic acid group and/or a carboxylate group, followed by heating to effect crosslinking.

5. A method for producing a water-absorbing agent, the method comprising
   adding the crosslinking agent composition for water-absorbing resins according to any one of claims 1 to 3 to a water-absorbing resin containing a carboxylic acid group and/or a carboxylate group, followed by heating to effect crosslinking.

## INTERNATIONAL SEARCH REPORT

International application No.
PCT/JP2015/058268

A. CLASSIFICATION OF SUBJECT MATTER
*C08L101/14*(2006.01)i, *B01J20/26*(2006.01)i, *B01J20/30*(2006.01)i, *C08K5/05*(2006.01)i, *C08L101/08*(2006.01)i

According to International Patent Classification (IPC) or to both national classification and IPC

B. FIELDS SEARCHED

Minimum documentation searched (classification system followed by classification symbols)
C08L101/14, B01J20/26, B01J20/30, C08K5/05, C08L101/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2002-363340 A (Nagase Chemtex Corp.), 18 December 2002 (18.12.2002), claims; examples (Family: none) | 1-5 |
| A | WO 2012/102407 A1 (Nippon Shokubai Co., Ltd.), 02 August 2012 (02.08.2012), entire text & US 2014/0031473 A1 & EP 2669318 A1 & CN 103459473 A | 1-5 |
| A | JP 2002-60544 A (Nagase Chemtex Corp.), 26 February 2002 (26.02.2002), entire text & US 2002/0185629 A1 & WO 2001/094459 A1 & EP 1298162 A1 & TW 520384 B & CN 1386126 A | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 June 2015 (04.06.15) | 16 June 2015 (16.06.15) |
| Name and mailing address of the ISA/ Japan Patent Office 3-4-3,Kasumigaseki,Chiyoda-ku, Tokyo 100-8915,Japan | Authorized officer<br>Telephone No. |

Form PCT/ISA/210 (second sheet) (July 2009)

**INTERNATIONAL SEARCH REPORT**

International application No.
PCT/JP2015/058268

C (Continuation). DOCUMENTS CONSIDERED TO BE RELEVANT

| Category* | Citation of document, with indication, where appropriate, of the relevant passages | Relevant to claim No. |
|---|---|---|
| A | JP 1-297430 A (Nippon Shokubai Co., Ltd.), 30 November 1989 (30.11.1989), entire text (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002060544 A
- JP 2003020363 A
- JP S6116903 A
- JP S59189103 A
- JP S627745 A
- JP S61264006 A